Europäisches Patentamt

European Patent Office

Office européen des brevets

(11) Numéro de publication: **0 183 627**
**A2**

## (12) DEMANDE DE BREVET EUROPEEN

(21) Numéro de dépôt: **85420185.2**

(22) Date de dépôt: **22.10.85**

(51) Int. Cl.⁴: **G 01 N 21/07**

(30) Priorité: **26.10.84 FR 8416448**

(43) Date de publication de la demande:
**04.06.86 Bulletin 86/23**

(84) Etats contractants désignés:
**AT BE CH DE GB IT LI LU NL SE**

(71) Demandeur: **Guigan, Jean**
**9, rue Jean Mermoz**
**F-75008 Paris(FR)**

(72) Inventeur: **Guigan, Jean**
**9, rue Jean Mermoz**
**F-75008 Paris(FR)**

(74) Mandataire: **Laurent, Michel et al,**
**20 rue Louis Chirpaz Boîte postale no. 32**
**F-69131 Ecully Cedex(FR)**

(54) **Procédé destiné à réaliser l'analyse médicale d'un échantillon liquide à l'aide d'au moins un réactif sec, et dispositif pour la mise en oeuvre du procédé.**

(57) Procédé destiné à réaliser l'analyse médicale d'un échantillon liquide à l'aide d'au moins un réactif sec et dispositif pour la mise en oeuvre du procédé.

Procédé pour réaliser l'analyse médicale d'un échantillon liquide utilisant un boitier (1) unitaire en matière plastique, compartimenté de manière à comporter une chambre de stockage (4) pour l'échantillon, une cellule calibrée (6), une chambre de stockage (30) pour un diluant et des chambres de réaction (40, 50, 60) susceptibles de contenir des réactifs secs. Diverses centrifugations permettent de faire passer successivement l'échantillon et le diluant dans les diverses chambres de réaction.

FIG.1

EP 0 183 627 A2

PROCEDE DESTINE A REALISER L'ANALYSE MEDICALE D'UN
ECHANTILLON LIQUIDE A L'AIDE D'AU MOINS UN REACTIF SEC,
ET DISPOSITIF POUR LA MISE EN OEUVRE DU PROCEDE.

La présente invention concerne un procédé destiné à réaliser l'analyse médicale d'un échantillon liquide à l'aide d'au moins un réactif sec, et un dispositif pour la mise en oeuvre du procédé.

La présente invention a pour but de mettre en oeuvre un procédé d'analyse d'une très faible dose d'échantillon liquide, de l'ordre de quelques microlitres. Ceci est particulièrement intéressant dans le cas d'analyses médicales, car il devient possible, par exemple, d'éviter au patient de subir des prises de sang au moyen de seringues, et d'utiliser simplement quelques gouttes de sang recueillies au bout d'un doigt.

Elle a également pour but de mettre au point un procédé permettant de réaliser la plupart des analyses médicales demandées jusqu'à présent (de l'ordre de 300).

Elle a enfin pour but de mettre en oeuvre un procédé bon marché et simple pour un opérateur qui se sert de boitiers stockés contenant des réactifs secs et un diluant.

La présente invention a pour objet un procédé destiné à réaliser l'analyse médicale d'un échantillon liquide à l'aide d'au moins un réactif sec et un diluant, remarquable notamment par le fait qu'il utilise un boitier compartimenté intérieurement de façon à présenter :

- une chambre de stockage pour ledit échantillon liquide reliée par un conduit capillaire à une extrémité d'une cellule calibrée dont l'autre extrémité est reliée par un conduit capillaire à une chambre de trop-plein ;

- une chambre de stockage pour ledit diluant liquide ;

- un déversoir relié respectivement par des conduits capillaires à ladite cellule calibrée et à ladite

- 2 -

0183627

chambre de stockage du diluant, et communiquant par ailleurs avec une première chambre de réaction susceptible
de contenir un réactif sec ;

- deux chambres de réaction susceptibles de contenir
des réactifs secs, situées de part et d'autre de ladite
première chambre de réaction, et communiquant avec elle
par des conduits capillaires d'orientations différentes.

Ledit boitier est fermé par un couvercle muni :

- d'une part, d'un réceptacle de stockage d'échantillon communiquant directement avec ladite chambre de
stockage d'échantillon et situé au-dessus d'elle ;

- et d'autre part, d'un bouchon amovible entrant
dans ledit déversoir pour obturer les extrémités desdits
tubes capillaires qui y aboutissent.

Des moyens sont prévus pour positionner ledit boitier sur le plateau d'une centrifugeuse selon plusieurs
positions déterminées se déduisant l'une de l'autre par
une rotation du boitier sur lui-même, par rapport au
plateau selon un angle donné.

Selon le procédé, on a disposé initialement le diluant liquide dans ladite chambre de stockage de diluant
et les réactifs secs respectivement dans lesdites chambres de réaction.

On introduit ledit échantillon dans ledit réceptacle
de stockage d'échantillon, ce dernier s'écoulant alors
par gravité dans ladite chambre de stockage d'échantillon
et on enlève ledit bouchon. On met en place ledit boitier
sur ledit plateau de la centrifugeuse en vue de réaliser
successivement plusieurs centrifugations, la position angulaire du boitier étant à chaque fois choisie, parmi
lesdites positions déterminées, en fonction de l'orientation du conduit capillaire concerné par rapport à la
direction de la force centrifuge, de manière à faire passer successivement ledit échantillon de ladite chambre
de stockage d'échantillon dans ladite cellule calibrée, puis de cette dernière dans ledit déversoir et dans ladite première chambre de réaction, et ensuite dans chacune des autres chambres de réaction.

Selon un mode de réalisation particulièrement avantageux, lesdites positions déterminées du boitier se déduisent les unes des autres par des rotations de l'ordre de 90° et de 180°, correspondant sensiblement aux angles que font entre eux lesdits conduits capillaires.

La présente invention a également pour objet un dispositif pour la mise en oeuvre du procédé précité. Il s'agit d'un boitier cylindrique plat en matière plastique dont le diamètre est de l'ordre de trois centimètres et qui est compartimenté intérieurement de façon à présenter :

- une chambre de stockage pour ledit échantillon liquide reliée par un conduit capillaire à une extrémité d'une cellule calibrée dont l'autre extrémité est reliée par un conduit capillaire à une chambre de trop-plein ;

- une chambre de stockage pour ledit diluant liquide ;

- un déversoir relié respectivement par des conduits capillaires à ladite cellule calibrée et à ladite chambre de stockage de diluant, et communiquant par ailleurs avec une première chambre de réaction, susceptible de contenir un réactif sec ;

- deux chambres de réaction susceptibles de contenir des réactifs secs situées de part et d'autre de ladite première chambre de réaction et communiquant avec elle par des conduits capillaires d'orientations différentes.

Ledit boitier constitue une pièce unitaire venue du moulage. Les conduits capillaires ont des diamètres de l'ordre de deux dizièmes de millimètre.

Le boitier est fermé par un couvercle en matière plastique muni d'un réceptacle de stockage d'échantillon communiquant directement avec ladite chambre de stockage d'échantillon et situé au-dessus d'elle. Le couvercle présente également une cheminée située au-dessus dudit déversoir et destinée à recevoir un bouchon susceptible d'obturer tous les orifices débouchant dans ledit déversoir. Cette cheminée ainsi que ledit réceptacle constituent avec le couvercle une pièce unitaire en matière plastique, l'ensemble étant venu du moulage.

Selon un mode de réalisation particulièrement avantageux, les conduits capillaires faisant communiquer ladite cellule calibrée et la chambre de stockage de diluant avec le déversoir sont parallèles entre eux. Les conduits capillaires faisant communiquer les chambres de réaction entre elles sont diamètralement opposés par rapport au déversoir et font un angle non nul avec les deux conduits capillaires précités.

La présente invention a également pour objet le dispositif précédent lorsque sa chambre de stockage de diluant contient quelques microlitres de diluant et que chacune desdites chambres de réaction contient un réactif sec ayant la forme d'une mine de crayon présentant une longueur de quelques millimètres.

D'autres caractéristiques et avantages de l'invention apparaîtront au cours de la description d'un mode de réalisation d'un dispositif permettant la mise en oeuvre du procédé selon l'invention. Dans le dessin annexé :

- la figure 1 est une vue de dessus du boitier utilisé, le couvercle enlevé ;

- les figures 2 à 6 sont respectivement des coupes selon les lignes II-II à VI-VI de la figure 1 ;

- les figures 7 à 18 montrent schématiquement les diverses positions du boitier contenant son échantillon et ses réactifs pendant les différentes phases du procédé selon l'invention.

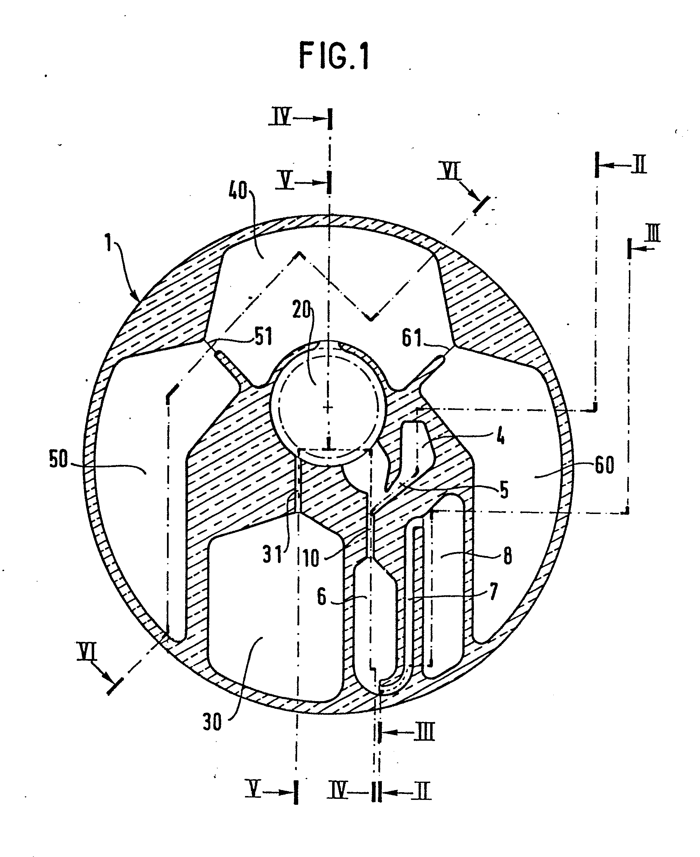

On voit dans les figures 1 à 6 un boitier (1) en matière plastique de forme générale cylindrique et plate, fermé par un couvercle (2) en matière plastique. A titre d'exemple, le boitier a un diamètre de l'ordre de trois centimètres.

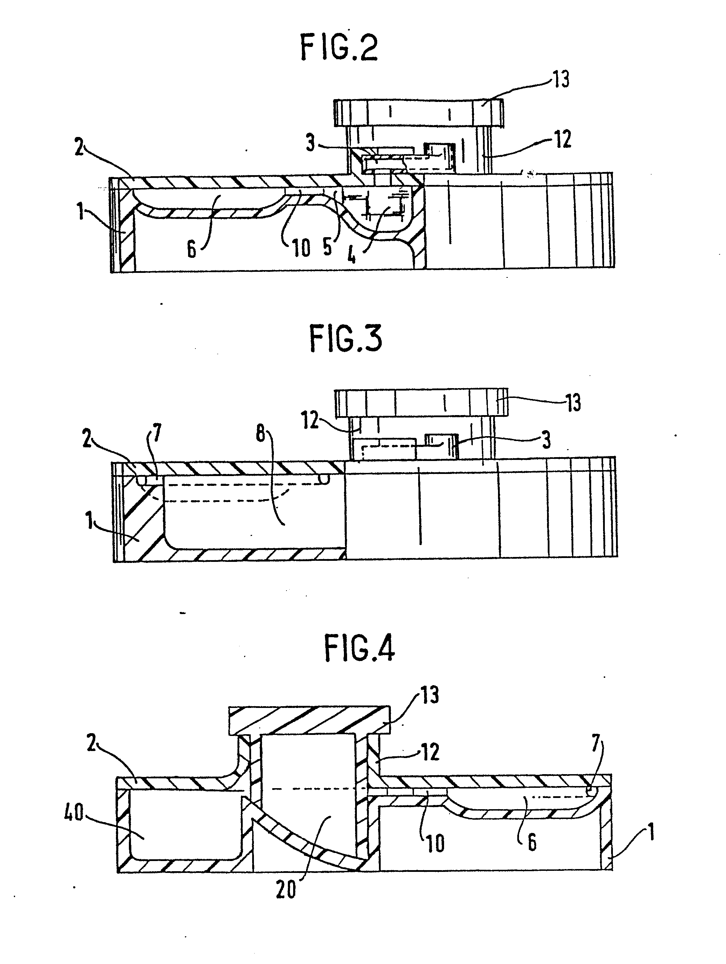

Les figures 1 et 2 montrent que la partie supérieure du couvercle (2) porte un réceptacle de stockage (3) pour un échantillon liquide, communiquant directement avec une chambre (4) de stockage d'échantillon intérieure au boitier (1).

La chambre de stockage (4) est reliée par un conduit capilaire (5) à une cellule calibrée (6) communiquant par un conduit capillaire (7) avec une chambre de trop-plein (8), (voir figure 3), et par un conduit capillaire (10) avec un déversoir (20), (voir figure 4). Ce dernier communique avec une chambre de réaction (40) susceptible de contenir un réactif sec.

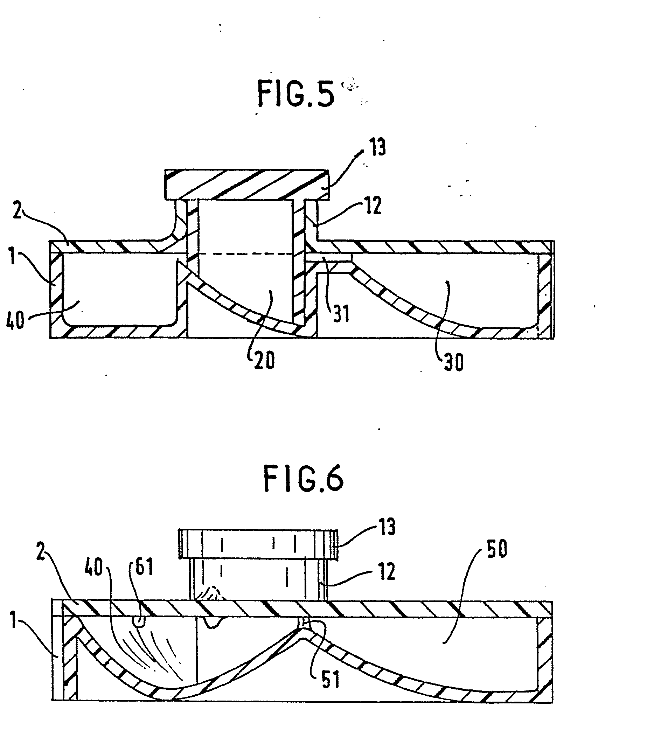

Le boitier (1) comporte en outre une chambre de stockage de diluant (30) communiquant avec le déversoir (20) par un conduit capillaire (31), (voir figure 5). On peut remarquer ici que les conduits capillaires (10) et (31) sont sensiblement parallèles entre eux. On a référencé (50) et (60) deux autres chambres de réaction, susceptibles de contenir des réactifs secs, (voir figure 6). Elles sont situées de part et d'autre de la chambre de réaction (40) et communiquent avec elle par deux conduits capillaires (51) et (61) inclinés l'un par rapport à l'autre et par rapport aux conduits capillaires (10) et (31).

Le couvercle (2) porte au-dessus du déversoir (20) une cheminée (12) susceptible de recevoir un bouchon (13). Pendant toute la durée de la conservation du boitier muni de ses réactifs, le bouchon (13) a essentiellement pour fonction d'obturer l'orifice du conduit capillaire (31) débouchant dans le déversoir (20).

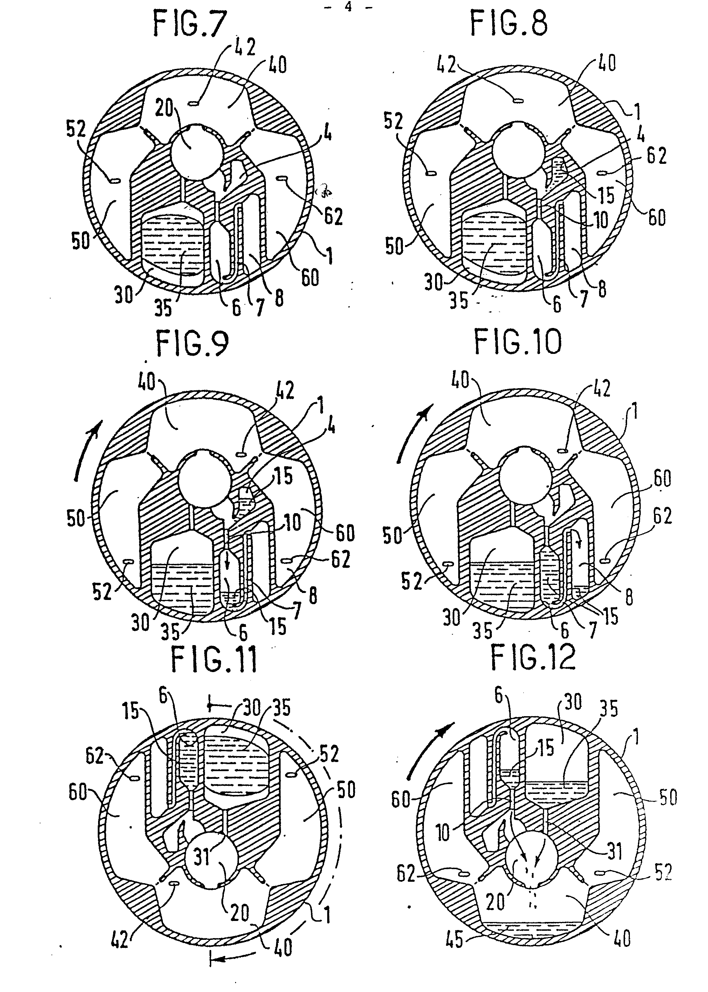

Les figures 7 à 18 montrent en vue de dessus le dispositif des figures 1 à 6 pendant la mise en oeuvre du procédé selon l'invention.

La figure 7 illustre la phase initiale lorsque les chambres (40,50 et 60) du boitier (1) ont reçu respectivement des réactifs secs (42,52,62). La chambre (30) contient un liquide diluant (35).

On dispose alors le boitier (1) sur le plateau d'une centrifugeuse. On imagine que l'on peut disposer simultanément une douzaine au moins de tels boitiers suivant un cercle sur ledit plateau. Le centre de rotation du plateau est situé de manière que l'extrémité de la cellule (6) correspondant au conduit capillaire (7) en soit plus éloignée que l'extrémité correspondant au conduit capillaire (10). La direction de la force centrifuge est sensiblement celle des conduits capillaires (10) et (31).

A ce moment, le bouchon (13) est enlevé et une goutte d'échantillon (15) de quelques microlitres est introduite dans le réceptacle (3). L'échantillon (15) aboutit dans la chambre de stockage (4), (voir figure 8).

On réalise alors une première centrifugation dont on a illustré une phase intermédiaire (figure 9) et la phase finale (figure 10). Les réactifs secs et le diluant restent stockés dans leurs chambres respectives, mais l'échantillon (15) passe dans la cellule calibrée (6) et le conduit capillaire (7). Lorsque la cellule calibrée (6) est remplie d'échantillon (15), l'excédent aboutit dans la chambre de trop-plein (8).

On réalise ensuite une rotation de 180° du boitier sur lui-même (voir figure 11) ; les conduits capillaires (10 et 31) sont donc encore parallèles à la direction de la force centrifuge.

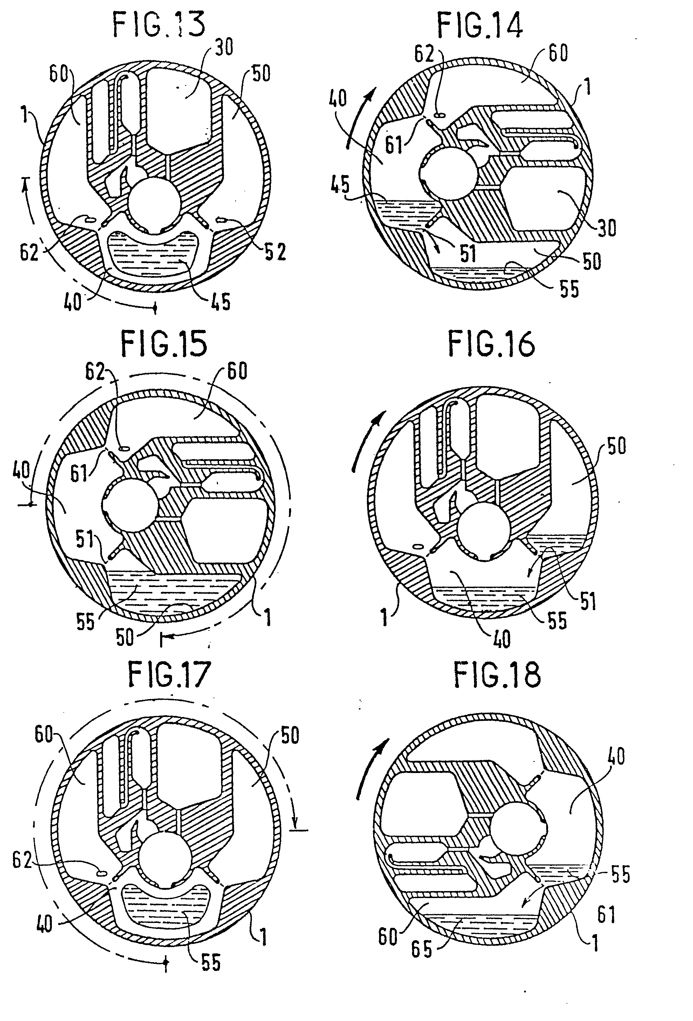

On opère une seconde centrifugation (voir figures 12 et 13) ; l'échantillon (15) passe par le conduit capillaire (10) dans le déversoir (20), puis dans la chambre de réaction (40). Simultanément, le diluant (35) passe par le conduit capillaire (31) dans le déversoir (20) et la chambre de réaction (40). On obtient ainsi un premier mélange (45) échantillon-diluant-réactif (voir figure 13).

Comme cela apparaît dans la figure 14, on effectue une nouvelle rotation de 90° du boitier autour de son axe. La direction du capillaire (51) est telle que le mélange (45) peut être chassé vers la chambre de réaction (50) par une troisième centrifugation (voir figures 14 et 15). On obtient alors dans la chambre (50) un nouveau mélange (55) contenant le réactif (52).

On opère une nouvelle rotation de 90° du boitier (1) (voir figure 16), suivie d'une quatrième centrifugation (voir figures 16 et 17) pour transférer le mélange (55) de la chambre de réaction (50) dans la chambre de réaction (40).

On réalise enfin une dernière rotation de 90° du boitier (1), (voir figure 18), suivie d'une cinquième centrifugation permettant de chasser le mélange (55) dans la chambre (60) où est réalisé avec le réactif (62) le mélange final (65) qui peut être observé par tout moyen approprié.

On a décrit un dispositif de mise en oeuvre utilisant un diluant et trois réactifs solides ; mais certaines réactions ne nécessitent qu'un ou deux réactifs solides et certaines des chambres de réaction peuvent rester vides. Selon une autre variante, on peut prévoir plusieurs types de boitiers contenant des nombres de chambres de réaction différents.

On pourra, sans sortir du cadre de l'invention, remplacer tout moyen par un moyen équivalent, et modifier notamment les positions relatives des chambres de réaction.

REVENDICATIONS

1/ Procédé destiné à réaliser l'analyse médicale d'un échantillon liquide à l'aide d'au moins un réactif sec (42,52,62) et un diluant (35) <u>caractérisé</u> par le fait qu'il utilise un boitier compartimenté intérieurement de façon à présenter :

- une chambre de stockage (4) pour ledit échantillon liquide (15) reliée par un conduit capillaire (5) à une extrémité d'une cellule calibrée (6) dont l'autre extrémité est reliée par un conduit capillaire (7) à une chambre de trop-plein (8) ;

- une chambre de stockage (30) pour ledit diluant liquide (35) ;

- un déversoir (20) relié respectivement par des conduits capillaires (10,31) à ladite cellule calibrée (6) et à ladite chambre de stockage du diluant (30), et communiquant par ailleurs avec une première chambre de réaction (40) susceptible de contenir un réactif sec (42);

- deux chambres de réaction (50,60) susceptibles de contenir des réactifs secs (52,62) situées de part et d'autre de ladite première chambre de réaction (40) et communiquant avec elle par des conduits capillaires (51, 61) d'orientations différentes ;

ledit boitier (1) étant fermé par un couvercle (2) muni :

- d'une part, d'un réceptacle de stockage (3) d'échantillon communiquant directement avec ladite chambre de stockage (4) d'échantillon et situé au-dessus d'elle,

- et d'autre part, d'un bouchon amovible (13) entrant dans ledit déversoir (20) pour obturer les extrémités desdits conduits capillaires (31) qui y aboutissent, et par le fait que des moyens sont prévus pour positionner ledit boitier sur le plateau d'une centrifugeuse selon plusieurs positions déterminées se déduisant l'une de l'autre par une rotation du boitier (1) sur lui-même, par rapport au plateau, selon un angle donné, procédé selon lequel on a disposé initialement ledit diluant liquide (35) dans ladite chambre de stockage de diluant (30) et lesdits réactifs secs (42,52,62) respectivement dans lesdites chambres de réaction (40,50,60), on introduit ledit échantillon (15) dans ledit réceptacle de stockage (3) d'échantillon, ce dernier s'écoulant alors par gravité dans ladite chambre de stockage (4) d'échantillon, on enlève ledit bouchon (13), on met en place ledit boitier (1) sur ledit plateau de la centrifugeuse en vue de réaliser successivement plusieurs centrifugations, la position angulaire du boitier (1) étant à chaque fois choisie, parmi lesdites positions déterminées, en fonction de l'orientation du conduit capillaire concerné par rapport à la direction de la force centrifuge, de manière à faire passer successivement ledit échantillon (15) de ladite chambre de stockage (4) d'échantillon dans ladite cellule calibrée (6), puis de cette dernière dans ledit déversoir (20) et dans ladite première chambre de réaction (40), et ensuite dans chacune des autres chambres de réaction (50,60).

2/ Procédé selon la revendication 1, caractérisé par le fait que lesdites positions déterminées du boitier (1) se déduisent les unes des autres par des rotations de l'ordre de 90° et de 180°, correspondant sensiblement aux angles que font entre eux lesdits conduits capillaires (31,51,61).

3/ Dispositif pour la mise en oeuvre du procédé selon l'une des revendications 1 et 2, caractérisé par le fait qu'il comprend un boitier (1) unitaire en matière plastique venu de moulage, fermé par un couvercle (2) unitaire en matière plastique venu de moulage, ledite boitier (1) étant compartimenté intérieurement de façon à présenter :

   - une chambre de stockage (4) pour ledit échantillon liquide (15) reliée par un conduit capillaire (5) à une extrémité d'une cellule calibrée (6) dont l'autre extrémité est reliée par un conduit capillaire à une chambre
de trop-plein (8) ;

  - une chambre de stockage (30) pour ledit diluant
liquide (35) ;

  - un déversoir (20) relié respectivement par des conduits capillaires (10,31) à ladite cellule calibrée (6)
et à ladite chambre de stockage (30) de diluant, et communiquant par ailleurs avec une première chambre de réaction (40) susceptible de contenir un réactif sec (42) ;

  - deux chambres de réaction (50,60) susceptibles de
contenir des réactifs secs (52,62) situées de part et
d'autre de ladite première chambre de réaction (40) et
communiquant avec elle par des conduits capillaires (51,
61) d'orientations différentes ;
ledit couvercle (2) étant muni :

  - d'une part, d'un réceptacle de stockage (3) d'é-
chantilon communiquant directement avec ladite chambre de
stockage (4) d'échantillon et situé au-dessus d'elle,

  - et d'autre part, d'une cheminée (12) située au-
dessus dudit déversoir (20) et destinée à recevoir un
bouchon (13) susceptible d'obturer tous les orifices débouchant dans ledit déversoir (20).

  4/ Dispositif selon la revendication 3, caractérisé
par le fait que lesdits conduits capillaires (10,31) faisant communiquer ladite cellule calibrée (6) et la chambre de stockage de diluant (30) avec le déversoir (20)
sont parallèles entre eux, tandis que lesdits conduits
capillaires (51,61) faisant communiquer les chambres de
réaction (40,50,60) entre elles sont diamètralement opposés par rapport audit déversoir et font un angle non nul
avec les deux conduits capillaires précités.

  5/ Dispositif (10,31) selon la revendication 3, caractérisé par le fait que ledit boitier (1) est plat et
cylindrique, que son diamètre est de l'ordre de trois

- 11 -                                    0183627

centimètres, et que lesdits conduits capillaires (10,31, 51,61) ont un diamètre de l'ordre de deux dizièmes de millimètres.

6/ Dispositif selon l'une des revendications 3 à 5, caractérisé par le fait que ladite chambre de stockage (30) de diluant contient quelques microlitres de diluant (35) et que chacune desdites chambres de réaction (40,50, 60) contient un réactif sec (42,52,62) ayant la forme d'une mine de crayon présentant une longueur de quelques millimètres.

0183627

# FIG.1

0183627

- 2 -

# FIG.2

# FIG.3

# FIG.4

## FIG.5

## FIG.6

FIG.7    FIG.8    FIG.9    FIG.10    FIG.11    FIG.12

## FIG.13

## FIG.14

## FIG.15

## FIG.16

## FIG.17

## FIG.18